# EUROPEAN PATENT SPECIFICATION

(11) **EP 3 112 730 B1**
(45) Date of publication and mention of the grant of the patent: **05.09.2018**
(21) Application number: 16176952.6
(22) Date of filing: 29.06.2016
(51) Int. Cl.: F16K 15/14

(54) **DUCKBILL VALVE ASSEMBLY**
ENTENSCHNABELVENTILANORDNUNG
ENSEMBLE DE SOUPAPE EN BEC DE CANARD

(30) Priority: 03.07.2015 NL 2015082
(43) Date of publication of application: 04.01.2017
(73) Proprietor: Avesto Tech B.V., 7575 EE Oldenzaal (NL)
(72) Inventor: NIJLAND, Peter Lodewijk Joannes, 7581DE Losser (NL); SCHOLTEN, Niels, 7591 WL Denekamp (NL); BEKHUIS, Niek Josef, 7642 BL Wierden (NL)
(74) Representative: Mink-Lindenburg, Charlotte Hildegard

(56) References cited:
- US-A- 4 535 818

## Description

The present invention relates to a valve assembly comprising a valve for defining a one way flow, comprising a pair of lips that are arranged in a converging relationship, wherein each lip has a lip base end and a lip outer end, wherein the lip base ends form part of an open valve base end and the lip outer ends are disposed adjacent each other to define a slit, wherein the valve further comprises a flange extending outwardly at the valve base end, said valve assembly further comprising a valve housing comprising a first housing part and a second housing part that are arranged to cooperate to enclose the valve for defining a one way flow, wherein the first housing part comprises a pair of first walls that are arranged in a converging relationship, wherein each first wall has a first wall base end and a first wall outer end, wherein the first wall base ends form part of an open first inlet end, and a pair of second walls interconnecting the first walls, wherein the first housing part further comprises a first collar part extending outwardly at the first inlet end.

Such a valve assembly is known in the relevant art as a duckbill valve assembly. Duckbill valves are unique, one-piece, elastomeric components that function as backflow prevention devices or one-way valves or check valves. They have elastomeric lips in the shape of a duckbill which prevent backflow and allow forward flow only. The main advantage of duckbill valves over other types of one-way valves is that duckbill valves are self-contained i.e. the critical sealing function is an integral part of the one-piece elastomeric component as opposed to valves where a sealing element has to engage with a smooth seat surface to form a seal. Therefore duckbill valves are easily incorporated and assembled into a wide variety of devices without the problems associated with the surface finish quality of mating seats and/or complex assembly processes. Duckbill valves are available in various elastomeric materials, including medical and food-grade silicone and hydrocarbon-resistant fluorosilicone rubber to handle a broad range of media and temperatures. Areas of application range from long-term service in harsh environments, such as in durable chemical pumps, to the high-volume use in disposable intravenous fluid delivery sets and from one-way valves used in automotive fuel pumps to delicate valves used in tubing circuits for heart surgery, soap dispensers, coffee makers, anti- siphoning valves in shower heads and toys.

US 4,535,818 discloses a valve assembly of the prior art comprising a valve for defining a one way flow. It is an object of the present invention to provide an improved duckbill valve assembly of the kind as mentioned above.

The valve assembly according to the invention is characterized in that each lip base end runs along one or more substantially straight lines and each first wall base end runs along one or more substantially straight lines, the flange comprises two opposing substantially straight lines and the second housing part comprises a second collar part extending outwardly at a second outlet end of the second housing part facing the inlet end of the first housing part, wherein the second collar part comprises an open space for accommodating the flange of the valve, wherein the circumferential edge of the open space comprises two opposing substantially straight lines.

In the valve of the valve assembly each straight line defines a folding area, surrounding the straight line, for the lips with respect to the flange that allow the valve to open easily at a low opening pressure while offering a higher flow per unit area. The valve housing of the valve assembly is especially designed to closely enclose the valve according to the present invention resulting in minimal dead space volume.

The two opposing straight lines of the flange and the two opposing straight lines of the circumferential edge of the open space allow for aligning, such that there is no interference and distortion between the valve lip and the housing.

Preferably each lip base end of a lip runs substantially parallel to a lip base end of an opposing lip. Consequently tension in the valve or material stress can be avoided.

In a practical preferred embodiment the flange and the circumferential edge of the open space are shaped generally as a parallelogram.

In a practical preferred embodiment the valve base end and the first inlet end generally form a parallelogram.

According to a first preferred embodiment the valve base end has a substantially square shape. The square allows for an easy assembly of the valve according to the invention.

In the first preferred embodiment the slit runs substantially parallel with respect to the lip base ends. According to a further elaboration of the practical embodiment each lip has a substantially planar surface. The planar lips are advantageously connected to the flange by the straight lines that define folding areas facilitating the opening and closing of the valve.

According to the first preferred embodiment the valve further comprises side walls interconnecting the lips, wherein each side wall has a side wall base end and a side wall outer end, wherein the lip base ends and the side wall base ends form the open valve base end and each side wall base end runs along a substantially straight line.

Preferably each side wall has a substantially planar surface. Just as the lips, the side walls are now connected or hinged to the flange by straight lines. As a consequence the flow characteristics of the valve according to the present invention are further improved.

According to a second preferred embodiment the valve base end and the first inlet end have a generally diamond shape.

In the second preferred embodiment the slit preferably runs substantially diagonal with respect to the valve base end. Furthermore each lip is provided with one or more folding lines running over the surface of the lip substantially perpendicular with respect to the slit. In addition two or more folding lines run along adjacent sides of the lips interconnecting the lips. The combination of technical features of the second preferred embodiment truly approximate the appearance of a duckbill. The folding lines define folding areas surrounding the folding lines that further facilitate the easy opening of the valve according to the present invention.

These and other features and advantages of the invention will be more apparent with a discussion of various preferred embodiments of the invention and reference to the associated drawings.

The invention will be explained in more detail with reference to the appended drawings, in which:
Fig. 1A schematically shows a first embodiment of a valve according to the present invention;
Fig. 1B schematically shows the valve of figure 1A in top view;
Fig. 1C schematically shows an alternative first embodiment of the valve of figure 1A;
Fig. 2A schematically shows a second embodiment of a valve according to the present invention;
Fig. 2B schematically shows the valve of figure 2A in top view;
Fig. 2C schematically shows an alternative second embodiment of the valve of figure 2A;
Fig. 3A schematically shows an assembly of a valve of figure 1A and a valve housing;
Fig. 3B schematically shows the assembly of figure 3A in exploded view;
Fig. 4A shows a first cross-sectional view of the assembly of figure 3A;
Fig. 4B shows a second cross-sectional view of the assembly of figure 3A; and
Fig. 4C shows a third cross-sectional view of the assembly of figure 3A.

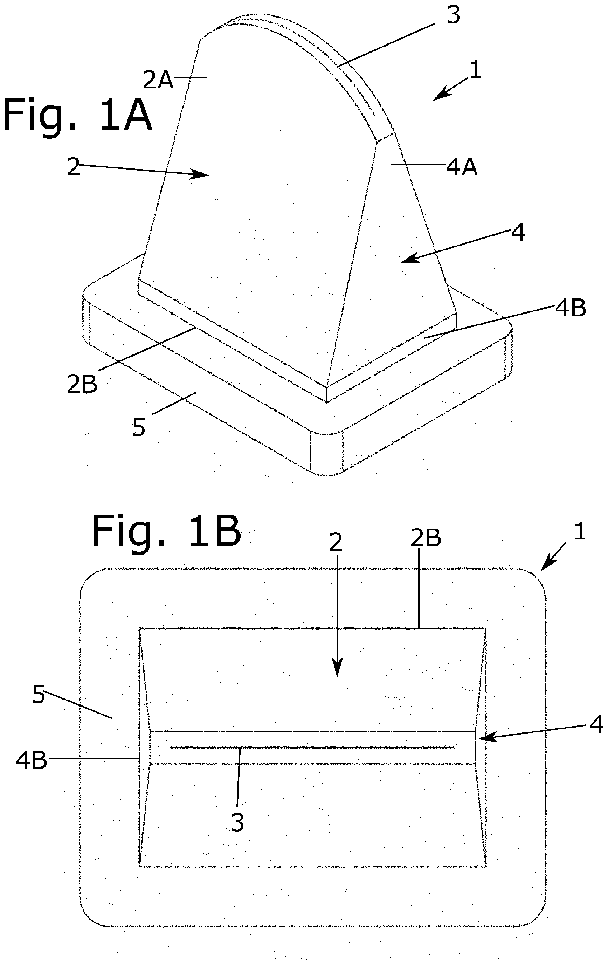

Figure 1A shows a first preferred embodiment of a valve 1 according to the present invention in a schematic view. Figure 1B shows valve 1 in top view. Valve 1 comprises a pair of lips 2 that extend in a converging relationship from a valve base to a slit 3. Each lip 2 has a lip base end 2B and a lip outer end 2A. The lip base ends 2B form part of the open valve base end. The lip outer ends 2A are disposed adjacent each other to define the slit 3.

Each lip base end 2B forms a substantially straight line. In the top view the slit 3 runs substantially parallel with respect to the opposing lip base ends 2B of the valve base end. Preferably each lip 2 has a substantially planar surface.

The valve 1 further comprises side walls 4 interconnecting the lips 2. Each side wall has a side wall base end 4B and a side wall outer end 4A. The side wall base ends 4B form the open valve base end together with the lip base ends 2B. Each side wall base end 4B forms a substantially straight line. Preferably each side wall 4 has a substantially planar surface.

According to the invention the valve base end 2B, 4B has a generally parallelogram shape that can clearly be seen in the top view of figure 1B. In the first preferred embodiment the valve base end 2B, 4B has a generally rectangular shape.

Valve 1 further comprises a flange 5 extending outwardly at the valve base end. In the first preferred embodiment of valve 1 the flange 5 has one or more straight sides. More specifically the flange 5 has a generally rectangular shape. In the preferred embodiment shown the straight sides are interconnected by slightly curved corners.

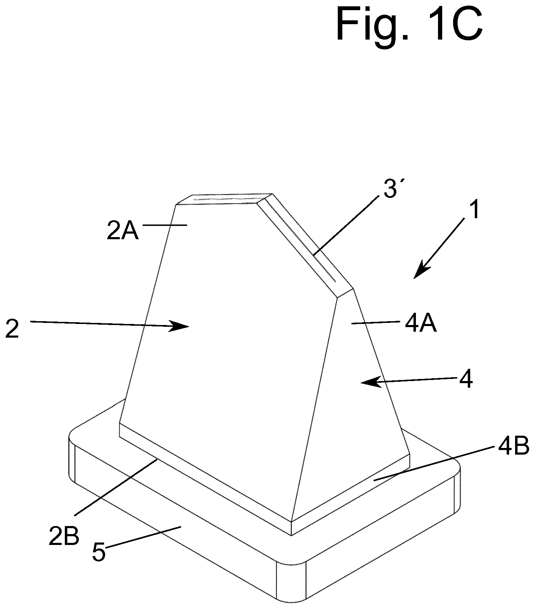

Fig. 1C schematically shows an alternative first embodiment of the valve of figure 1A. In the alternative embodiment the slit 3' is formed by straight lines at an angle that lies in the centre. Other than the slit 3' the alternative embodiment of figure 1C is identical to the embodiment of figure 1A.

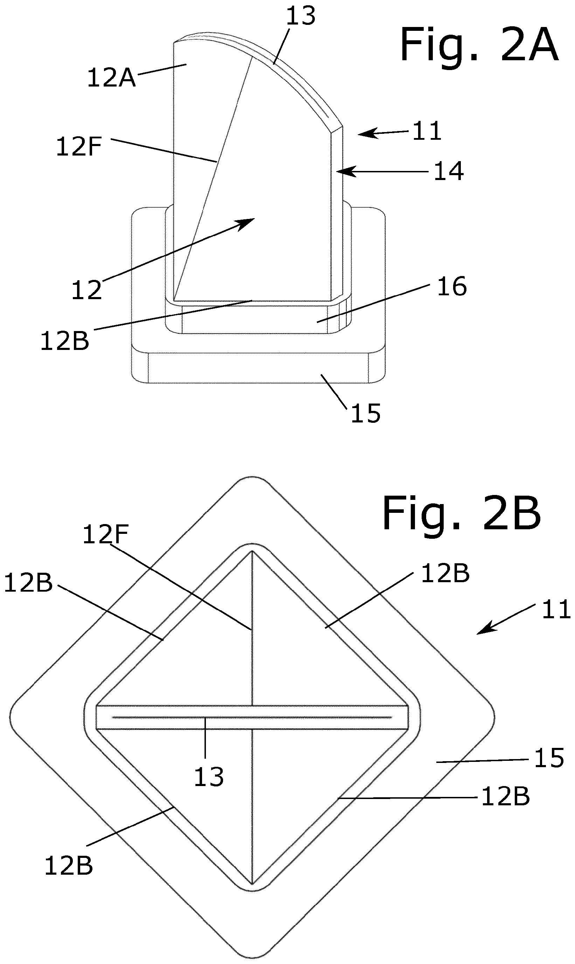

Figure 2A shows a second preferred embodiment of the valve 11 according to the invention. Figure 2B shows valve 11 schematically in top view. Valve 11 comprises a pair of lips 12 that extend in a converging relationship from a valve base to a slit 13. Each lip 12 has a lip base end 12B and a lip outer end 12A. The lip base ends 12B form part of the open valve base end. The lip outer ends 12A are disposed adjacent each other to define the slit 13.

Each lip base end 12B runs over two substantially straight lines that are at an angle. Each lip 12 is provided with a folding line 12F defining a folding area running over the surface of the lip 12. The folding line 12F starts at the angle between the straight lines of the lip base end 22B and ends at the slit 13. The folding line 12F runs substantially perpendicular with respect to the slit 13. The lips 12 are interconnected at the sides 14.

According to the invention the valve base end 12B has a generally parallelogram shape that can clearly be seen in the top view of figure 2B. In the second preferred embodiment the valve base end 12B has a generally diamond shape. In valve 11 slit 13 runs substantially diagonal with respect to the valve base end.

Valve 11 further comprises a flange 15 extending outwardly at the valve base end. In the second preferred embodiment of valve 11 the flange 15 has one or more straight sides. More specifically the flange 15 has two opposing straight lines. In the preferred embodiment shown the flange 15 has a generally square shape. The straight sides are preferably interconnected by slightly curved corners.

A transition part 16 is arranged between the flange 15 and the lips 12. The transition part 16 allows a flange shape other than a parallelogram, e.g. circular.

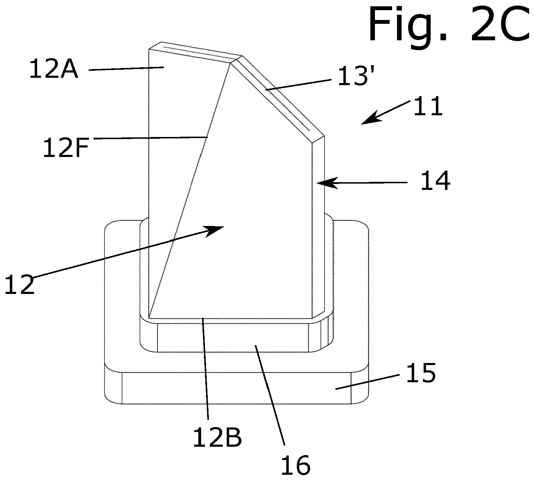

Fig. 2C schematically shows an alternative second embodiment of the valve of figure 2A. In the alternative embodiment the slit 13' is formed by straight lines at an angle that lies in the centre. The folding line 12F runs over the surface of the lip 12 from the angle in the slit 13' toward the lip base end 12B. Other than the slit 13' the alternative embodiment of figure 2C is identical to the embodiment of figure 2A.

All the preferred embodiments 1, 11 shown share the concept of a generally parallelogram shaped open valve base end formed by generally straight lip base ends. In the second embodiment 11 the lip base ends 12B entirely form the open valve base end. In the first embodiment 1 side walls 4B are present and form the open valve base end together with two lip base ends.

In the valve according to the present invention the slit 3, 13 preferably is arcuate. Alternatively the slit 3', 13' is at an angle. Consequently a larger slit can be formed in a valve of the same width that will allow the valve to open further allowing a larger flow.

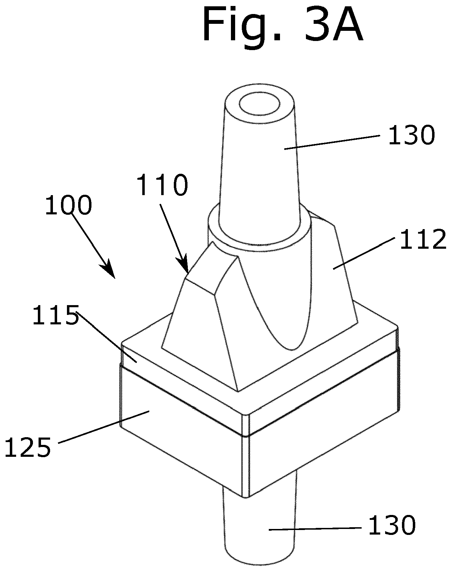

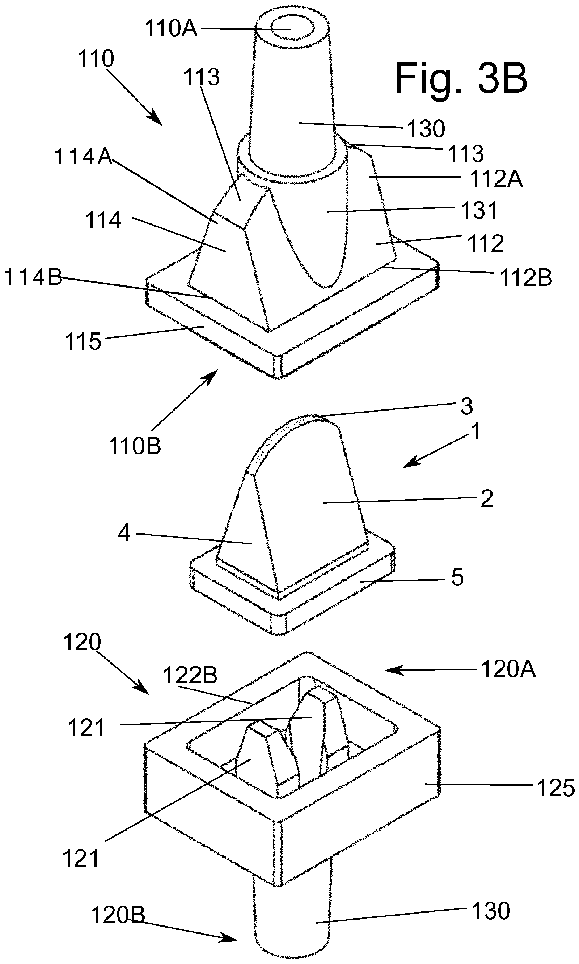

Figure 3A shows an assembly of a valve of figure 1A and a valve housing. Figure 3B shows the assembly of figure 3A in exploded view.

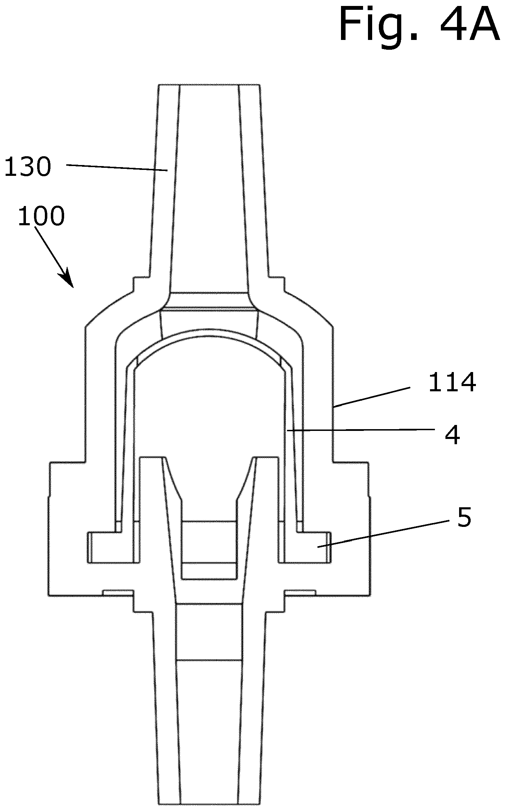

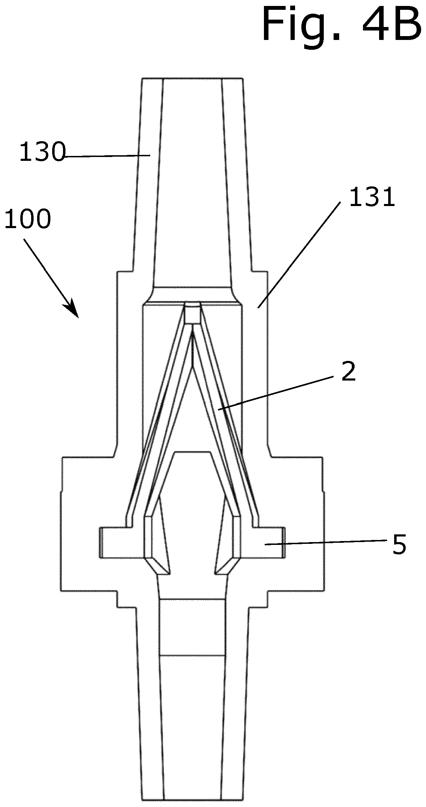

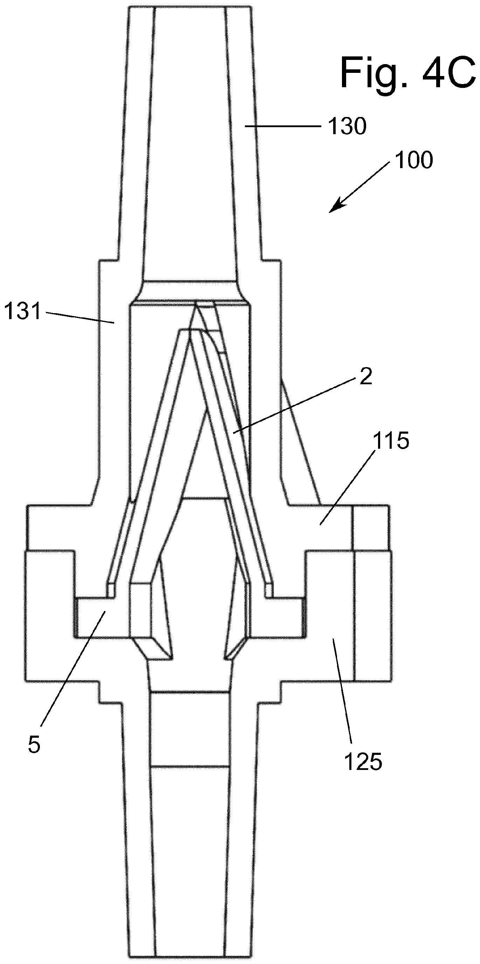

Figure 4A shows a first cross-sectional view through a front view of the assembly of figure 3A. Figure 4B shows a second cross-sectional view through a side view of the assembly of figure 3A. Figure 4C shows a third cross-sectional view of the assembly of figure 3A at an angle of about 15 degrees to the view of figure 4B.

The valve housing comprises a first housing part 110 and a second housing part 120 that are arranged to cooperate and closely enclose a valve for defining a one-way flow with low dead volume. In figure 3B valve 1 according to the invention is shown to be accommodated in the valve assembly 100. The first housing part 110 comprises a pair of first walls 112 that are arranged in a converging relationship. Each first wall 112 has a first wall base end 112B and a first wall outer end 112A. The first wall base ends form part of an open first inlet end 110B.

The first walls 112 are connected by a pair of second walls 114 and a pair of tapered shoulders 113.

The first housing part has a first inlet end 110B and a first outlet end 110A. The second housing part has a second inlet end 120B and a second outlet end 120A facing the first inlet end 110B of the first housing part. A tube connector 130 extends through the first and second housing parts and the valve to define a flow path for a fluid in one direction.

The valve housing part further comprises a collar formed by a first collar part 115 on the first housing part 110 and a second collar part 125 on the second housing part 120. The first collar part 115 extends outwardly at the first inlet end 110B. The second collar part 125 extends outwardly at the second outlet end 120A of the second housing part 120.

The straight lines that characterize the valve according to the present invention are also present in the valve housing according to the present invention. In the first housing part 110 each first wall base end 112B runs along one or more substantially straight lines, more specifically along two opposing straight lines. Each second wall has a second wall base end 114B and a second wall outer end 114A. Each second wall base end runs along one or more substantially straight lines, more specifically along two opposing straight lines. Consequently the first inlet end 110B generally forms a parallelogram. Furthermore the second collar part 125 comprises an open space for accommodating a flange 5 of the valve 1. The open space has a circumferential edge 122B that comprises at least one substantially straight line. Preferably the circumferential edge 122B comprises two opposing straight lines. Said straight line assist in positioning the valve in the valve housing. It provides an anti-twist solution in the assembly. In the preferred embodiment shown the circumferential edge 122B of the open space is shaped generally as a parallelogram.

The first collar part 115 and the second collar part 125 are arranged to cooperate. After the valve 1 has been assembled the first housing part 110 and the second housing part 120 can be joint permanently or remain detachable depending on the application of the valve assembly. The characterizing straight lines of the valve 1, 11 and the valve housing 110, 120 are also present in the outer dimensions of the collar 115, 125. The valve circumferential surface of the first collar part 115 and the second collar part 125 comprise at least one substantially straight line, preferably two opposing straight lines. In the preferred embodiment shown the circumferential surface is shaped generally as a parallelogram. Preferably the outer dimensions (length and width) of the first and second collar parts are substantially equal. The height in flow direction may be different.

In the first housing part tube connector 130 is provided with a tube stop 131 creating room for a larger flow path. The first housing part has a tapered shape due to shoulders 113 in the direction of flow to improve the flow characteristics. There are no surfaces having an orientation perpendicular to the flow direction present in the flow path of the valve housing.

In the second housing part 120 back pressure supports 121 are present in the open space. The back pressure supports 121 can be received in the open valve base end to prevent the valve from inverting. This is a very important characteristic as it effectively prevents back flow.

Generally the invention is based on the inventive thought of providing a one-way valve, specifically a duckbill valve, having a geometry comprising straight lines rather than circular lines. In addition thereto a matching valve housing is provided comprising straight lines rather than circular lines. The straight lines contribute to enhance the flow characteristics of the valve. Furthermore the straight lines allow for easy and reliable positioning of the valve in the valve housing. The mating surfaces of the valve and the valve housing minimize the dead volume in the assembly.

It is noted that different variants of the preferred embodiments shown are possible within the scope of the invention. In particular the various technical measures of the alternative embodiments of the lips and the flange of the valve shown in the accompanying figures can be combined to form other alternative embodiments which are to be incorporated herein. Although the preferred embodiment of the valve housing shown is designed for cooperation with the first embodiment of the valve according to the invention having a rectangular flange, it will be clear to a person skilled in the art that the open space in the collar of the valve housing can be adapted to cooperate with the second embodiment of the valve according to the invention having a diamond shaped flange. In practice the shape of the open space can be adapted to any other shape of a flange of any other duckbill valve as well.

The valve according to the invention is preferably universally suitable and can be manufactured in a range of sizes. The valve is designed for cost effective production thus facilitating the use as a disposable article.

Although the preferred embodiment of the valve has been described in the context of a one-way valve for medical application, more specifically a purge valve, the invention is not limited thereto. A person skilled in the art will have no difficulty making small changes to the valve, such as scaling it up, in order to render it suitable for a particular intended use outside this field.

## Claims

1. Valve assembly comprising a valve (1, 11) for defining a one way flow, comprising a pair of lips (2, 12) that are arranged in a converging relationship, wherein each lip has a lip base end (2B, 12B) and a lip outer end (2A, 12A), wherein the lip base ends form part of an open valve base end and the lip outer ends are disposed adjacent each other to define a slit (3, 13), wherein the valve further comprises a flange (5, 15) extending outwardly at the valve base end, said valve assembly further comprising a valve housing comprising a first housing part (110) and a second housing part (120) that are arranged to cooperate to enclose the valve (1) for defining a one way flow, wherein the first housing part comprises a pair of first walls (112) that are arranged in a converging relationship, wherein each first wall (112) has a first wall base end (112B) and a first wall outer end (112A), wherein the first wall base ends form part of an open first inlet end (110B), and a pair of second walls (114) interconnecting the first walls, wherein the first housing part further comprises a first collar part (115) extending outwardly at the first inlet end, wherein each lip base end (2B, 12B) runs along one or more substantially straight lines and each first wall base end (112B) runs along one or more substantially straight lines, the flange (5, 15) comprises two opposing substantially straight lines and the second housing part (120) comprises a second collar part (125) extending outwardly at a second outlet end (120A) of the second housing part facing the inlet end (110B) of the first housing part, wherein the second collar part (125) comprises an open space for accommodating the flange (5, 15) of the valve (1, 11), wherein the circumferential edge (122B) of the open space comprises two opposing substantially straight lines.

2. Valve assembly according to claim 1, wherein the flange (5, 15) and the circumferential edge (122B) of the open space are shaped generally as a parallelogram.

3. Valve assembly according to claim 2, wherein the flange (5, 15) and the circumferential edge (122B) of the open space have a substantially rectangular shape.

4. Valve assembly according to claim 1, 2 or 3, wherein the valve base end (2B, 4B; 12B) and the first inlet end (110B) generally form a parallelogram.

5. Valve assembly according to claim 4, wherein the valve base end (2B, 4B) and the first inlet end (110B) have a substantially square shape.

6. Valve assembly according to one or more of the preceding claims, wherein the slit (3) runs substantially parallel with respect to the lip base ends (2B).

7. Valve assembly according to one or more of the preceding claims, wherein each lip (2) has a substantially planar surface.

8. Valve assembly according to one or more of the preceding claims, wherein the valve further comprises side walls (4) interconnecting the lips (2), wherein each side wall has a side wall base end (4B) and a side wall outer end (4A), wherein the lip base ends (2B) and the side wall base ends (4B) form the open valve base end and each side wall base end runs along a substantially straight line.

9. Valve assembly according to claim 8, wherein each side wall (4) has a substantially planar surface.

10. Valve assembly according to claim 4, wherein the valve base end (12B) and the first inlet end (110B) have a generally diamond shape.

11. Valve assembly according to claim 10, wherein the slit (13) runs substantially diagonal with respect to the valve base end.

12. Valve according to claim 10 or 11, wherein each lip (12) is provided with one or more folding lines (12F) running over the surface of the lip substantially perpendicular with respect to the slit (13).

13. Valve assembly according to claim 10, 11 or 12, wherein the valve (11) comprises two or more folding lines (14) running along adjacent sides of the lips (12) interconnecting the lips.

14. Valve assembly according to one or more of the preceding claims, wherein the slit (3, 13) is arcuate.

15. Valve assembly according to one or more of the preceding claims 1-14, wherein the slit (3', 13') is at an angle.

## Patentansprüche

1. Ventilanordnung umfassend ein Ventil (1, 11) zum Definieren einer Einwegströmung, umfassend ein Paar Lippen (2, 12), die in einer konvergierenden Beziehung angeordnet sind, wobei jede Lippe ein Lippenbasisende (2B, 12B) und ein äußeres Lippenende (2A, 12A) aufweist, wobei die Lippenbasisenden einen Teil eines offenen Ventilbasisendes bilden und die äußeren Lippenenden nebeneinander angeordnet sind, um einen Schlitz (3, 13) zu definieren, wobei das Ventil ferner einen Flansch (5, 15) umfasst, der sich am Ventilbasisende nach außen erstreckt, wobei die Ventilanordnung ferner ein Ventilgehäuse mit einem ersten Gehäuseteil (110) und einem zweiten Gehäuseteil (120) umfasst, die ausgebildet sind, um zusammenwirken, um das Ventil (1) zu umschließen, um eine Einwegströmung zu definieren, wobei das erste Gehäuseteil ein Paar erster Wände (112) umfasst, die in einer konvergierenden Beziehung angeordnet sind, wobei jede erste Wand (112) ein erstes Wandbasisende (112B) und ein erstes Wandaußenende (112A) aufweist, wobei die ersten Wandbasisenden einen Teil eines offenen ersten Einlassendes (110B) ausbildet und ein Paar zweiter Wände (114) die ersten Wände miteinander verbinden, wobei der erste Gehäuseteil ferner ein erstes Kragenteil (115) umfasst, das sich an dem ersten Einlassende nach außen erstreckt, wobei jedes Lippenbasisende (2B, 12B) entlang einer oder mehrerer im Wesentlichen gerader Linien verläuft und jedes erste Wandbasisende (112B) entlang einer oder mehrerer im Wesentlichen gerader Linien verläuft, wobei der Flansch (5, 15) zwei einander gegenüberliegende im Wesentlichen gerade Linien aufweist und das zweite Gehäuseteil (120) ein zweites Kragenteil (125) umfasst, das sich an einem zweiten Auslassende (120A) des zweiten Gehäuseteils dem Einlassende (110B) des ersten Gehäuseteils zugewandt nach außen erstreckt, wobei der zweite Kragenteil (125) einen offenen Raum zur Aufnahme des Flansches (5, 15) des Ventils (1, 11) aufweist, wobei die Umfangskante (122B) des offenen Raums zwei einander gegenüberliegende im Wesentlichen gerade Linien aufweist.

2. Ventilanordnung nach Anspruch 1, wobei der Flansch (5, 15) und die Umfangskante (122B) des offenen Raums im Allgemeinen als ein Parallelogramm ausgebildet sind.

3. Ventilanordnung nach Anspruch 2, wobei der Flansch (5, 15) und die Umfangskante (122B) des offenen Raums eine im Wesentlichen rechteckige Form aufweisen.

4. Ventilanordnung nach Anspruch 1, 2 oder 3, wobei das Ventilbasisende (2B, 4B; 12B) und das erste Einlassende (110B) im Allgemeinen ein Parallelogramm ausbilden.

5. Ventilanordnung nach Anspruch 4, wobei das Ventilbasisende (2B, 4B) und das erste Einlassende (110B) eine im Wesentlichen quadratische Form aufweisen.

6. Ventilanordnung nach einem oder mehreren der vorhergehenden Ansprüche, wobei der Schlitz (3) im Wesentlichen parallel zu den Lippenbasisenden (2B) verläuft.

7. Ventilanordnung nach einem oder mehreren der vorhergehenden Ansprüche, wobei der jede Lippe (2) eine im wesentlichen ebene Oberfläche aufweist.

8. Ventilanordnung nach einem oder mehreren der vorhergehenden Ansprüche, wobei das Ventil ferner Seitenwände (4) aufweist, die die Lippen (2) miteinander verbinden, wobei jede Seitenwand ein Seitenwandbasisende (4B) und ein äußeres Seitenwandende (4A) aufweist, wobei die Lippenbasisenden (2B) und die Seitenwandbasisenden (4B) das offene Ventilbasisende bilden und jedes Seitenwandbasisende entlang einer im Wesentlichen geraden Linie verläuft.

9. Ventilanordnung nach Anspruch 8, wobei jede Seitenwand (4) eine im Wesentlichen ebene Oberfläche aufweist.

10. Ventilanordnung nach Anspruch 4, wobei das Ventilbasisende (12B) und das erste Einlassende (110B) eine im Allgemeinen diamantförmige Form aufweisen.

11. Ventilanordnung nach Anspruch 10, wobei der Schlitz (13) im Wesentlichen diagonal in Bezug auf das Ventilbasisende verläuft.

12. Ventil nach Anspruch 10 oder 11, wobei jede Lippe (12) mit einer oder mehreren Faltlinien (12F) versehen ist, die über die Oberfläche der Lippe im Wesentlichen senkrecht in Bezug auf den Schlitz (13) verlaufen.

13. Ventilanordnung nach Anspruch 10, 11 oder 12, wobei das Ventil (11) zwei oder mehreren Faltlinien (14) aufweist, die entlang benachbarter Seiten der Lippen (12) verlaufen, die die Lippen miteinander verbinden.

14. Ventilanordnung nach einem oder mehreren der vorhergehenden Ansprüche, wobei der Schlitz (3, 13) bogenförmig ist.

15. Ventilanordnung nach einem oder mehreren der vorhergehenden Ansprüche 1-14, wobei der Schlitz (3', 13') in einem Winkel steht.

## Revendications

1. Ensemble de valve comprenant une valve (1, 11) pour définir un écoulement à sens unique, comprenant une paire de lèvres (2, 12) qui sont disposées selon une relation convergente, chaque lèvre ayant une extrémité de base de lèvre (2B, 12B) et une extrémité extérieure de lèvre (2A, 12A), les extrémités de base de lèvre faisant partie d'une extrémité de base de valve ouverte et les extrémités extérieures de lèvre étant disposées l'une à côté de l'autre pour définir une fente (3, 13), la valve comprenant en outre une bride (5, 15) s'étendant vers l'extérieur à l'extrémité de base de valve, ledit ensemble de valve comprenant en outre un boîtier de valve comprenant une première partie de boîtier (110) et une seconde partie de boîtier (120) qui sont conçues pour coopérer afin d'enfermer la valve (1) en vue de définir un écoulement à sens unique, la première partie de boîtier comprenant une paire de premières parois (112) qui sont disposées selon une relation convergente, chaque première paroi (112) ayant une première extrémité de base de paroi (112B) et une première extrémité extérieure de paroi (112A), les premières extrémités de base de paroi faisant partie d'une première extrémité d'entrée ouverte (110B), et une paire de secondes parois (114) interconnectant les premières parois, la première partie de boîtier comprenant en outre une première partie de collier (115) s'étendant vers l'extérieur à la première extrémité d'entrée, chaque extrémité de base de lèvre (2B, 12B) s'étendant le long d'une ou plusieurs lignes sensiblement droites et chaque première extrémité de base de paroi (112B) s'étendant le long d'une ou plusieurs lignes sensiblement droites, la bride (5, 15) comprenant deux lignes sensiblement droites opposées, et la seconde partie de boîtier (120) comprenant une seconde partie de collier (125) s'étendant vers l'extérieur à une seconde extrémité de sortie (120A) de la seconde partie de boîtier faisant face à l'extrémité d'entrée (110B) de la première partie de boîtier, la seconde partie de collier (125) comprenant un espace ouvert pour recevoir la bride (5, 15) de la valve (1, 11), le bord circonférentiel (122B) de l'espace ouvert comprenant deux lignes sensiblement droites opposées.

2. Ensemble de valve selon la revendication 1, dans lequel la bride (5, 15) et le bord circonférentiel (122B) de l'espace ouvert ont une forme générale de parallélogramme.

3. Ensemble de valve selon la revendication 2, dans lequel la bride (5, 15) et le bord circonférentiel (122B) de l'espace ouvert ont une forme sensiblement rectangulaire.

4. Ensemble de valve selon la revendication 1, 2 ou 3, dans lequel l'extrémité de base de valve (2B, 4B ; 12B) et la première extrémité d'entrée (110B) ont une forme générale de parallélogramme.

5. Ensemble de valve selon la revendication 4, dans lequel l'extrémité de base de valve (2B, 4B) et la première extrémité d'entrée (110B) ont une forme sensiblement carrée.

6. Ensemble de valve selon l'une ou plusieurs des revendications précédentes, dans lequel la fente (3) s'étend de façon sensiblement parallèle aux extrémités de base de lèvre (2B).

7. Ensemble de valve selon l'une ou plusieurs des revendications précédentes, dans lequel chaque lèvre (2) a une surface sensiblement plane.

8. Ensemble de valve selon l'une ou plusieurs des revendications précédentes, dans lequel la valve comprend en outre des parois latérales (4) interconnectant les lèvres (2), chaque paroi latérale ayant une extrémité de base de paroi latérale (4B) et une extrémité extérieure de paroi latérale (4A), les extrémités de base de lèvre (2B) et les extrémités de base de paroi latérale (4B) formant l'extrémité de base de valve ouverte et chaque extrémité de base de paroi latérale s'étendant le long d'une ligne sensiblement droite.

9. Ensemble de valve selon la revendication 8, dans lequel chaque paroi latérale (4) a une surface sensiblement plane.

10. Ensemble de valve selon la revendication 4, dans lequel l'extrémité de base de valve (12B) et la première extrémité d'entrée (110B) ont une forme générale de losange.

11. Ensemble de valve selon la revendication 10, dans lequel la fente (13) s'étend sensiblement en diagonale par rapport à l'extrémité de base de valve.

12. Valve selon la revendication 10 ou 11, dans laquelle chaque lèvre (12) est munie d'une ou plusieurs lignes de pliage (12F) s'étendant sur la surface de la lèvre de façon sensiblement perpendiculaire à la fente (13).

13. Ensemble de valve selon la revendication 10, 11 ou 12, dans lequel la valve (11) comprend deux ou plusieurs lignes de pliage (14) s'étendant le long de côtés adjacents des lèvres (12) interconnectant les lèvres.

14. Ensemble de valve selon l'une ou plusieurs des revendications précédentes, dans lequel la fente (3, 13) est courbée.

15. Ensemble de valve selon l'une ou plusieurs des revendications précédentes 1-14, dans lequel la fente (3', 13') est inclinée.
